# EUROPEAN PATENT APPLICATION

(11) **EP 2 592 471 A1**
(43) Date of publication of application: **15.05.2013**
(21) Application number: 12191600.1
(22) Date of filing: 07.11.2012
(51) Int. Cl.: G03B 21/00, G03B 21/20

(54) **Projector**

(30) Priority: 08.11.2011 JP 2011244390
(71) Applicant: Ricoh Company, Ltd., Tokyo 143-8555 (JP)
(72) Inventor: Iwama, Kenichi, Tokyo 143-8555 (JP)
(74) Representative: Schwabe - Sandmair - Marx

(57) **Abstract**

A projector (50) includes an information input unit (2), a reader (6), a condition information storage (5), an image data processing device (10), and a controller (4). The information input unit (2) inputs information matched to each projection surface. A information storage medium (13) that can communicate information with other device without contacting can store identification (ID) information of a corresponding projection surface. The reader (6) reads the ID information stored in the information storage medium disposed at each projection surface. The condition information storage (5) stores the information. Upon reading ID information, the read ID information is correlated with the stored information, and then stored in the condition information storage (5). The image data processing device (10) corrects image data. The image data projection device (11) projects the corrected image data. The controller (4) searches for information correlated to ID information and instructs the image data processing device to correct image data.

## Description

### BACKGROUND

### Technical Field

The present invention relates to a projector installed with a non-contact electronic tag reader, in which projector settings can be changed based on information on the electronic tag.

### Description of the Background Art

Projectors can be used in various situations such as conferences, meetings, presentations, video viewing, or the like. To project an easy-to-see image on a screen, a plurality of settings and adjustments may be required to be made. For example, settings may be changed depending on the color of the projection surface, and illumination level of the projected images is changed depending on the size of the room, the contrast afforded by the projection surface, etc. If the same projector is always used in the same place, such settings may be required to be made only once. However, if the same projector is used in many different places, the settings of the projector are required to be changed with each change of location, which is inconvenient.

JP-2011-049865-A discloses a configuration using a cradle to store settings, by which settings and adjustments can be made without too much inconvenience. The cradle is an expansion unit that can charge, transmit data, or expand the capabilities of mobile data devices without connecting the device directly to a standard connection port or the like. However, in JP-2011-049865-A, a plurality of cradles is required to register settings of a plurality of projection surfaces. Therefore, each time the projector is set up, the cradle must be switched to the one storing the settings for that location, which is inconvenient.

### SUMMARY

In one aspect of the present invention, a projector is devised. The projector includes an information input unit to input projection condition information matched to each one of a plurality of projection surfaces, the projection condition information including information for projecting an image with a given image quality on each one of the plurality of projection surfaces; an information storage medium that can communicate information without contacting a counterpart device, disposable at each of the projection surfaces; to store at least identification (ID) information of a corresponding projection surface; a reader (6) to read the ID information stored in the information storage medium disposed at each one of the plurality of projection surfaces; a condition information storage to store the projection condition information input by the information input unit, and upon reading ID information of a specific projection surface by the reader, the read ID information is correlated with the stored projection condition information, and then the read ID information and the stored projection condition information are stored in the condition information storage; an image data processing device to correct image data to be projected on the specific projection surface based on the projection condition information set for that specific projection surface; an image data projection device to project the image data corrected by the image data processing device on a projection surface; and a controller to search for projection condition information correlated to ID information, read out by the reader, from the condition information storage, and to instruct the image data processing device to correct image data based on the searched projection condition information.

In another aspect of the present invention, a projector is devised. The projector includes an information input unit to input projection condition information matched to each one of a plurality of projection surfaces, the projection condition information including information for projecting an image with a given image quality on each one of the plurality of projection surfaces; a reader to read identification (ID) information stored in an information storage medium that can communicate information without contacting a counterpart device, the information storage medium disposed at each of the projection surfaces storing at least the ID information of a corresponding projection surface; a condition information storage to store the projection condition information input by the information input unit, and upon reading ID information of a specific projection surface by the reader, the read ID information is correlated with the stored projection condition information, and then the read ID information and the stored projection condition information are stored in the condition information storage; an image data processing device to correct image data to be projected on the specific projection surface based on the projection condition information set for that specific projection surface; an image data projection device to project the image data corrected by the image data processing device on a projection surface; and a controller to search for projection condition information correlated to ID information, read out by the reader, from the condition information storage, and to instruct the image data processing device to correct image data based on the searched projection condition information.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 shows a basic configuration of a projector;
FIG. 2 shows a block diagram of an internal configuration of a projector according to an example embodiment projector;
FIG. 3 shows examples of projection condition information storable in a condition information storage;
FIG. 4 shows a flowchart of a process of storing projection condition information for a projector; and
FIG. 5 shows a flowchart of a process of reading out and setting projection condition information for a projector.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

### DETAILED DESCRIPTION OF EXEMPLARY EMBODIMENTS

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that operate in a similar manner and achieve a similar result.

Referring now to the drawings, an apparatus or system according to an example embodiment is described hereinafter.

It should be noted that the following example embodiment is just one example embodiment of the present invention, and other elements, arrangements, assemblies, and combinations can be devised within the scope of the present invention.

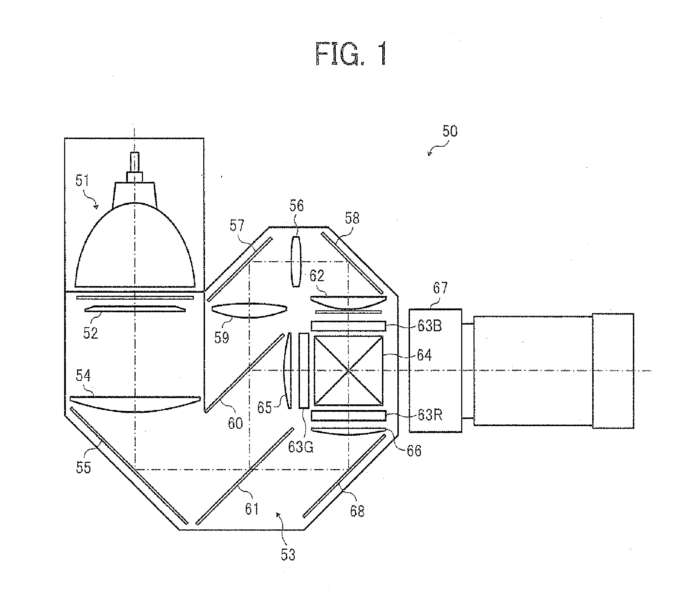

FIG. 1 shows an example configuration of a projector 50 such as a color image projector, which may be referred to as a projection-type display apparatus such as a liquid crystal projector. The projector 50 includes, for example, a light source 51, and an illumination optical system having a first lens array 52 and a compound lens 54. The first lens array 52 is arranged next to the light exit plane of the light source 51, and the compound lens 54 is arranged the exit side of the first lens array 52.

The light emitted from the illumination optical system is reflected by a reflection mirror 55, and then enters a light separation unit 53 having dichroic mirrors 61 and 60, and a reflection mirror 68.

Further, the projector 50 includes a light-guide system having an incident-side lens 59, a relay lens 56, and reflection mirrors 57 and 58. Further, the light-guide system includes three field lens 66, 65, 62, three liquid crystal light valves 63R, 63G, 63B, a cross dichroic prism 64, and a projection lens 67.

The reflection mirror 55 reflects the light exiting from the compound lens 54 to the direction of the light separation unit 53. The light separation unit 53 separates the light exiting from the compound lens 54 into three lights such as red, green, and blue lights using the two dichroic mirrors 61 and 60.

The first dichroic mirror 61 passes the red light component while reflecting the blue light component and the green light component among the light emitted from the compound lens 54. The red light that has passed through the first dichroic mirror 61 reflects at the reflection mirror 68, and then reaches a red-light liquid crystal light valve 63R via the field lens 66. The field lens 66 converts the light beams exiting from each part of the compound lens 54 as the light beams parallel to the light axis (or main light beam). The field lenses 65 and 62 disposed before other liquid crystal light valves can function in a similar manner.

As for the blue light and green light reflected at the first dichroic mirror 61, the green light is reflected by the second dichroic mirror 60, and reaches a green-light liquid crystal light valve 63G via the field lens 65.

In contrast, the blue light passes through the second dichroic mirror 60, and the incident-side lens 59 of the light-guide system. The blue light that has reflected at the reflection mirror 57, passes through the relay lens 56, reflects at the reflection mirror 58, and then reaches a blue light liquid crystal light valve 63B via the field lens 62.

The light-guide system is used for the blue light because the light path length of the blue light is longer than the light path length of other color light, by which the decrease of light use efficiency, which may be caused by light diffusion, can be prevented. With such a configuration, light beams or light flux that enter the incident-side lens 59 can be transmitted to the field lens 62.

Each of the liquid crystal light valves 63R, 63G, 63B can be used as a light modulator that modulates the light entering the light valve based on received image information. With such a configuration, each of the color lights that enters the corresponding liquid crystal light valve 63R, 63G, 63B is modulated based on the corresponding image information to be used to form an image corresponding to each of the color lights. The modulated color lights exiting from the corresponding liquid crystal light valves 63R, 63G, 63B enter the cross dichroic prism 64. The cross dichroic prism 64 synthesizes the modulated three color lights to form a color image. As such, the cross dichroic prism 64 can function as a color light synthesizing unit.

The cross dichroic prism 64 may be configured with four right-angle prisms and a dielectric multilayer member that reflects the red light, and a dielectric multilayer member that reflects the blue light, in which such dielectric multilayer members are disposed between the boundary faces of the right-angle prisms in a X-like pattern. The three modulated color lights can be synthesized by such dielectric multilayer member as synthesized light which is projected to form a color image. The synthesized light generated by the cross dichroic prism 64 exits to the projection lens 67. The projection lens 67 projects the synthesized light onto a projection screen to display a color image on the projection screen. As described later, an image data processing device 10 processes image data, and then an image data projection device 11 drives each of the liquid crystal light valves 63R, 63G, and 63B based on the image data processed by the image data processing device 10 to project a color image.

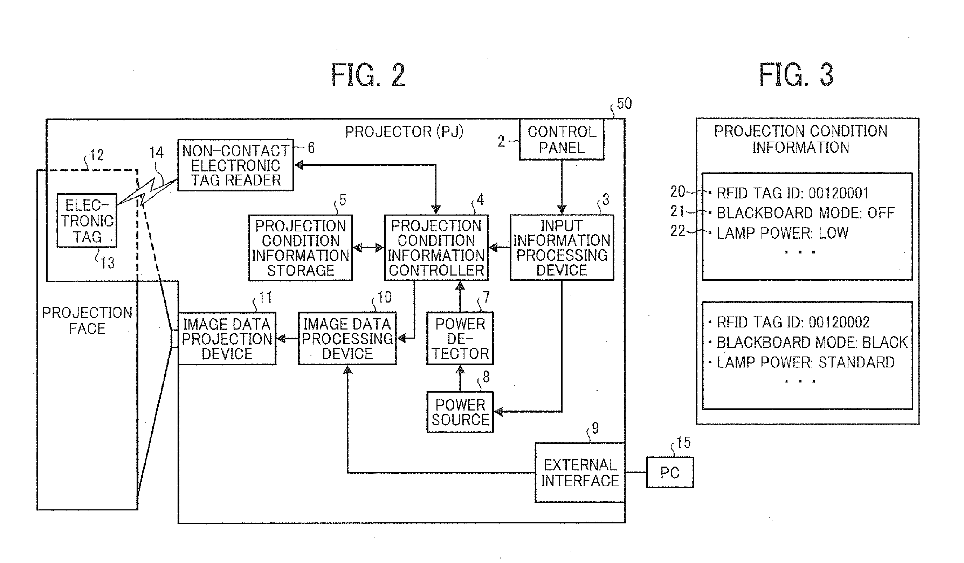

FIG. 2 shows a block diagram of an internal configuration of the projector 50 according to an example embodiment. The projector 50 projects images on a projection surface 12 based on projection condition information set for each type of the projection surface 12. The projector 50 includes, for example, a non-contact electronic tag reader 6 (hereinafter, reader 6), a projection condition information storage 5 (hereinafter, condition information storage 5), an image data processing device 10, an image data projection device 11, a projection condition information controller 4 (hereinafter, controller 4), a control panel 2, an input information processing device 3, a power detector 7, a power source 8, and an external interface 9, and a non-contact electronic tag 13.

The reader 6 reads identification (ID) information stored in the non-contact electronic tag 13, used as a non-contact information storage medium, disposed on the projection surface 12. The non-contact electronic tag 13, which may be also be referred to as electronic tag 13 or tag 13 for the simplicity of expression, is an example of an information storage medium that can communicate information without contacting a counterpart device. The electronic tag 13 may or may not be included in the projector 50 as a component of the projector 50.

The condition information storage 5 may store projection condition information correlated to ID information stored in the non-contact electronic tag 13. The condition information storage 5 can store projection condition information input by the control panel 2 that can function as an information input unit.

The image data processing device 10 corrects image data to be projected to the projection surface 12. The image data projection device 11 projects the image data corrected by the image data processing device 10 onto the projection surface 12.

The controller 4 searches projection condition information correlated to the ID information read from the condition information storage 5 by using the reader 6, and instructs the image data processing device 10 to correct the image data based on the searched projection condition information.

The control panel 2 can be used to input the projection condition information. As such, the control panel 2 is an example of an information input unit.

The input information processing device 3 processes information from the control panel 2, and inputs information to the controller 4 and the power source 8. The power source 8 supplies power to the projector 50. The power detector 7 detects the ON status of the power source 8 and reports to the controller 4. The external interface 9 is used to communicate with external devices such as a personal computer (PC) 15. The PC 15 may supply source data of image data to be projected. Further, the reader 6 can be set at a position or distance at which the electronic tag 13 is within range of the electromagnetic waves 14.

Further, in the above configuration, the projection condition information is stored in the projector 50. However, if the projection condition information is readable and writable by using the electronic tag 13 and the reader 6, the projection condition information can be stored in the electronic tag 13 while the projector 50 stores only ID information.

Further, a selection unit that can select projection condition information stored in the condition information storage 5 can be included, for example, in the controller 4. With such a configuration, any projection condition information can be selected from the condition information storage 5 without referring to ID information stored in the electronic tag 13.

FIG. 3 shows an example of projection condition information storable in the condition information storage 5. The projection condition information includes various settings for the projector 50, which is correlated with tag ID 20. The projector 50 may have a surface-color-based correction function when the projector 50 projects images on a non-white projection surface, in which the projection surface is a color other than white. When an image is projected onto a color surface, by using the surface-color-based correction function, the projector 50 can change or adjust a color of the projected image so that the color of images projected on the color surface can be recognized by human eyes as images projected on a white surface as closely as possible.

The projection condition information including, for example, tag ID 20, a blackboard mode 21, and a lamp power 22, can be stored in the condition information storage 5. For example, an electronic tag having tag ID of "00120001" may be disposed for a projection surface having a white screen, in which the surface-color-based correction is not required. Therefore, the projection condition information of "blackboard mode : OFF," and "lamp power : low" is stored. Further, an electronic tag having tag ID of "00120002" may be disposed for a projection surface having a blackboard or blackboard screen, in which the surface-color-based correction is required. Therefore, the projection condition information of "blackboard mode : black," and "lamp power : standard" is stored. Such information can be stored in the condition information storage 5 by the controller 4.

Further, color information such as complementary color relationship between the color of projection surface 12 and the projected image color can be stored. For example, if a green-color board is used, images can be easier to see when images are projected in red.

Further, the projection condition information may include information for adjusting illumination level of projected images. Further, the condition information storage 5 can store a plurality of projection condition information describing different conditions.

A description is now given of a process of storing the projection condition information for the projector 50, and a process of reading out and setting the projection condition information for the projector 50.

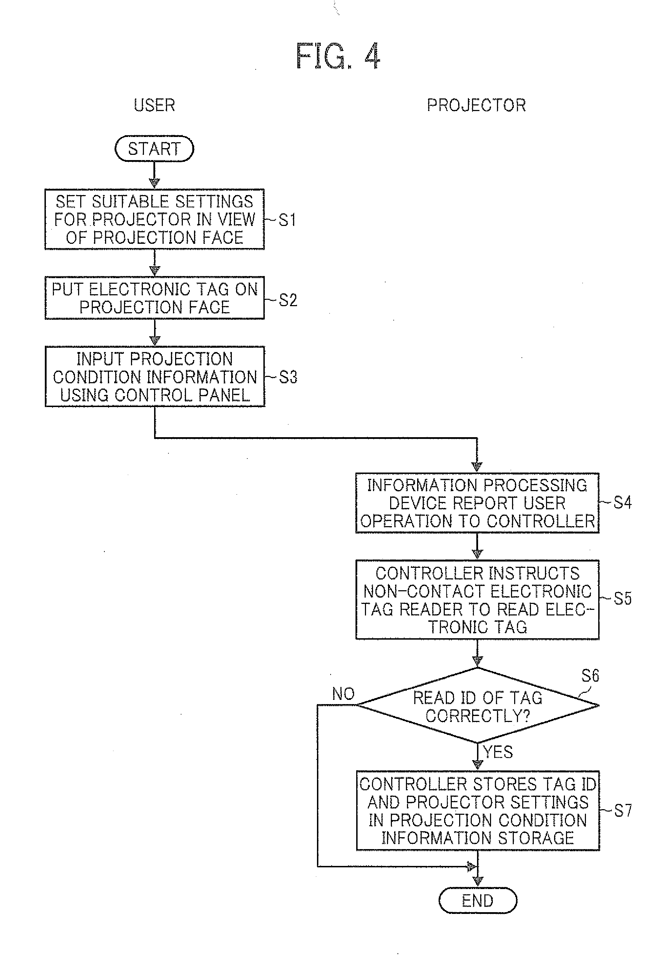

FIG. 4 shows a flowchart of process of storing the projection condition information for the projector 50, in which a user operation, and an operation of the projector 50 are separately explained.

At first, a user may check the color of the projection surface 12 and room conditions (e.g., size, brightness of room) to examine and set suitable settings for the projection surface 12, and then determines the projection condition information (step S1). For example, if the projection surface 12 is a blackboard or a colored surface, the surface-color-based correction is set.

Upon determining the projection condition information, the electronic tag 13 storing ID information is attached to the projection surface 12 (step S2). With such a configuration, the projection surface 12 can be correlated with the information stored in the electronic tag 13.

Then, the determined projection condition information is input from the control panel 2 (step S3), by which the user operation ends.

The projection condition information input by the user is processed by the input information processing device 3, and then transmitted to the controller 4 (step S4).

Then, the controller 4 instructs the reader 6 to emit the electromagnetic wave 14 to read the ID information stored in the electronic tag 13. When the electronic tag 13 receives the electromagnetic wave 14, the electronic tag 13 is activated by the electromagnetic wave 14 used as a power supply, and then the ID information stored in the electronic tag 13 is read by the reader 6 (step S5).

If the ID information is correctly read (step S6: Yes), the controller 4 correlates the read ID information and the projection condition information input from the control panel 2, and stores the ID information and the projection condition information in the condition information storage 5 (step S7). With such a configuration, the ID information and the projection condition information are correlated and stored. In contrast, if the ID information is not correctly read (step S6: No), the operation is ended, and the electronic tag 13 is replaced with another one, which can function normally.

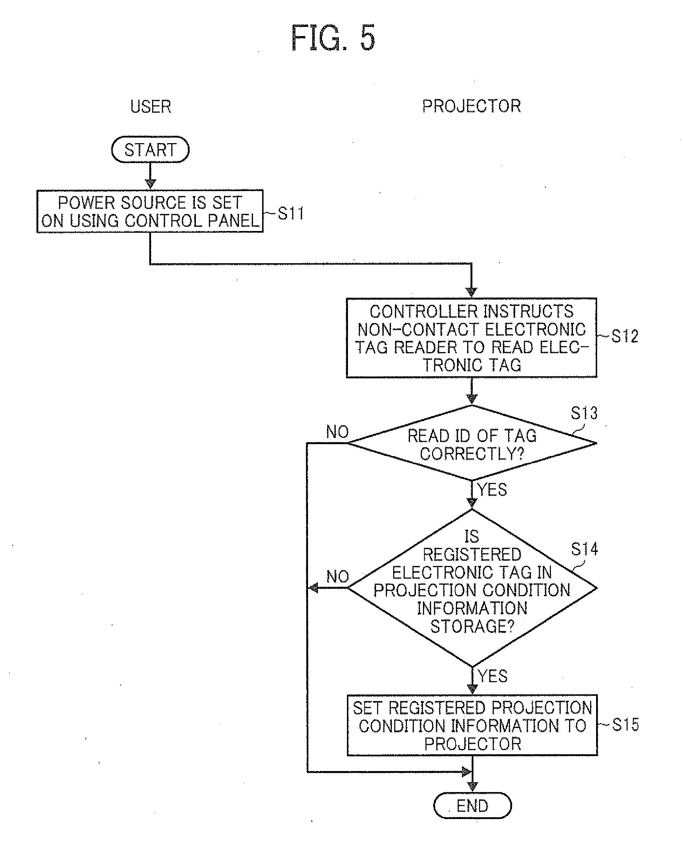

FIG. 5 shows a flowchart of a process of reading out the projection condition information stored in the condition information storage 5 and setting the projection condition information to the projector 50, in which a user operation, and an operation of the projector 50 are separately explained.

At first, a user sets the power source 8 at ON using the control panel 2 (step S11).

Then, the controller 4 instructs the reader 6 to emit the electromagnetic wave 14 to read the ID information stored in the electronic tag 13. When the electronic tag 13 receives the electromagnetic wave 14, the electronic tag 13 is activated by the electromagnetic wave 14 used as a power supply, and then the ID information stored in the electronic tag 13 is read by the reader 6 (step S12).

If the ID information is correctly read (step S13: Yes), the controller 4 searches the condition information storage 5 to determine whether a registered electronic tag matched to the read-out ID information is stored in the condition information storage 5 (step S14). If the registered electronic tag is found (step S14: Yes), the projection condition information matched to the registered electronic tag is set for the projector 50, and then the image data processing device 10 corrects the image data based on the projection condition information matched to the ID information of the registered electronic tag, and the image data projection device 11 projects the corrected image data onto the projection surface 12 (step S15). In contrast, if the ID information is not correctly read (step S13: No), or the registered electronic tag is not found (step S14: No), the operation ends.

As above described, based on environmental conditions of various projection surfaces, projection condition information suitable for each projection surface is prepared, and the projection condition information is correlated to the ID information of the electronic tag 13 attached to the projection surface 12 and then stored. Therefore, even if the environment of the projection surface 12 changes, the projection condition information can be automatically searched using the ID information of the electronic tag 13, by which the projector 50 can be operated under suitable conditions set for the projection surface 12.

In the above described example embodiment, projection condition information suitable for each one of projection surfaces can be stored for a projector. Therefore, even if a projection surface to be used for image projection is changed from one to another, the projector can be automatically set with settings suitable for the concerned projection surface.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a Wireless Application Protocol (WAP) or 3G-compliant phone) and so on. Since the present invention can be implemented as software, each and every aspect of the present invention thus encompasses computer software implementable on a programmable device.

The computer software can be provided to the programmable device using any storage medium or carrier medium for storing processor readable code such as a flexible disk, a compact disk read only memory (CD-ROM), a digital versatile disk read only memory (DVD-ROM), DVD recording only/rewritable (DVD-R/RW), electrically erasable and programmable read only memory (EEPROM), erasable programmable read only memory (EPROM), a memory card or stick such as USB memory, a memory chip, a mini disk (MD), a magneto optical disc (MO), magnetic tape, a hard disk in a server, a solid state memory device or the like, but not limited these.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

In the above-described example embodiment, a computer can be used with a computer-readable program, described by object-oriented programming languages such as C++, Java (registered trademark), JavaScript (registered trademark), Perl, Ruby, or legacy programming languages such as machine language, assembler language to control functional units used for the apparatus or system. For example, a particular computer (e.g., personal computer, work station) may control an information processing apparatus or an image processing apparatus using a computer-readable program, which can execute the above-described processes or steps. In the above described embodiments, at least one or more of the units of apparatus can be implemented in hardware or as a combination of hardware/software combination. In example embodiment, processing units, computing units, or controllers can be configured with using various types of processors, circuits, or the like such as a programmed processor, a circuit, an application specific integrated circuit (ASIC), used singly or in combination.

Numerous additional modifications and variations are possible in light of the above teachings. It is therefore to be understood that within the scope of the appended claims, the disclosure of the present invention may be practiced otherwise than as specifically described herein. For example, elements and/or features of different examples and illustrative embodiments may be combined each other and/or substituted for each other within the scope of this disclosure and appended claim.

## Claims

1. A projector (50), comprising:
an information input unit (2) to input projection condition information matched to each one of a plurality of projection surfaces, the projection condition information including information for projecting an image with a given image quality on each one of the plurality of projection surfaces;
an information storage medium (13) that can communicate information without contacting a counterpart device, disposable at each of the projection surfaces, to store at least identification (ID) information of a corresponding projection surface;
a reader (6) to read the ID information stored in the information storage medium disposed at each one of the plurality of projection surfaces;
a condition information storage (5) to store the projection condition information input by the information input unit, and upon reading ID information of a specific projection surface by the reader, the read ID information is correlated with the stored projection condition information, and then the read ID information and the stored projection condition information are stored in the condition information storage (5);
an image data processing device (10) to correct image data to be projected on the specific projection surface based on the projection condition information set for that specific projection surface;
an image data projection device (11) to project the image data corrected by the image data processing device on a projection surface; and
a controller (4) to search for projection condition information correlated to ID information, read out by the reader, from the condition information storage, and to instruct the image data processing device to correct image data based on the searched projection condition information.

2. The projector (50) of claim 1, wherein the projection condition information includes information for adjusting a color of a projected image depending on the color of the projection surface.

3. The projector (50) of claim 1, wherein the projection condition information includes information for adjusting illumination level of the projected image.

4. The projector (50) of claim 1, further comprising a selection unit to select projection condition information stored in the condition information storage (5).

5. A projector (50), comprising:
an information input unit (2) to input projection condition information matched to each one of a plurality of projection surfaces, the projection condition information including information for projecting an image with a given image quality on each one of the plurality of projection surfaces;
a reader (6) to read identification (ID) information stored in an information storage medium (13) that can communicate information without contacting a counterpart device, the information storage medium (13) disposed at each of the projection surfaces storing at least the ID information of a corresponding projection surface;
a condition information storage (5) to store the projection condition information input by the information input unit, and upon reading ID information of a specific projection surface by the reader, the read ID information is correlated with the stored projection condition information, and then the read ID information and the stored projection condition information are stored in the condition information storage (5);
an image data processing device (10) to correct image data to be projected on the specific projection surface based on the projection condition information set for that specific projection surface;
an image data projection device (11) to project the image data corrected by the image data processing device on a projection surface; and
a controller (4) to search for projection condition information correlated to ID information, read out by the reader, from the condition information storage, and to instruct the image data processing device to correct image data based on the searched projection condition information.
